# EUROPEAN PATENT SPECIFICATION

(11) **EP 0 632 738 B1**
(45) Date of publication and mention of the grant of the patent: **08.11.1995**
(21) Application number: 93905825.1
(22) Date of filing: 09.02.1993
(51) Int. Cl.: B01D 9/00

(54) **PROCESS FOR CRYSTALLIZATION IN A DRAFT TUBE BAFFLE CRYSTALLIZER**
KRISTALLISATIONSVERFAHREN IN EINEM UMLENKKRISTALLISATOR MIT ABLENKSCHEIBEN
PROCESSUS DE CRISTALLISATION DANS UN APPAREIL DE CRISTALLISATION A CHICANE DE TUBE D'ASPIRATION

(30) Priority: 27.03.1992 US 859575
(43) Date of publication of application: 11.01.1995
(73) Proprietor: AlliedSignal Inc., Morristown, New Jersey 07962-2245 (US)
(72) Inventor: CHOI, Mo, Kan, Richmond, VA 23236 (US); HORNBERGER, Roger, Richmond, VA 23225 (US); LILLEY, Roy, Jeffrey, Jr., Succasunna, NJ 07876 (US); NEIMAN, Jeffrey, E., Providence Forge, VA 23140 (US); RHODES, Willie, Woodrow, Jr., Hopewell, VA 23860 (US); KLINE, Charles, Elmo, Richmond, VA 23231 (US)
(74) Representative: Brock, Peter William
(86) International application number: US9301132
(87) International publication number: WO9319826

(56) References cited:
- US-A- 2 346 517
- US-A- 3 071 447
- US-A- 3 628 919
- US-A- 3 873 275

## Description

This invention relates to a process for crystallization in a draft tube baffle crystallizer wherein cycling in the particle size distribution of the product withdrawn is reduced and the rate of production of granular size crystals is increased.

Many useful products are produced by crystallization from aqueous solution. It is desirable to produce large particles for both commercial and process benefits. This is particularly true for materials which are used in the fertilizer applications, such as ammonium sulfate, potassium chloride, and potassium sulfate. The trend of modern agriculture is to employ bulk blends, i.e., mixtures of crystals of individual fertilizers. Granular size crystals, i.e., large crystals of greater than 1.7 mm, command a premium price because they can be applied more uniformly and segregate less from crystals of other components of the bulk blends. When the crystallizer produces a preponderance of large crystals, removal of mother liquor is expedited and the drying and screening operations are more efficient.

Production of large crystals has been made easier with the introduction of the draft tube baffle crystallizer (DTB). The design of this crystallizer is described in U.S.-A-3,873,275. The problem with the DTB crystallizer is the tendency to cycle, that is, exhibit a large time dependent variation in the crystal size distribution. Although the DTB crystallizers can produce a high percentage of their production as crystals of size greater than 1.7 mm when at the high points of the cycle, considerably less is made at the low points. There is also production of considerable quantities of fine crystals at these low points. These wide variations in crystal size distribution are undesirable because there is loss of premium priced large crystals, introduction of non-uniformity in product size caused by segregation in storage piles and difficulties in screening.

U.S.-A-4,263,010 teaches a dynamic control method and apparatus for obtaining a uniform particle size. A light scattering particle size analyzer is utilized to analyze a preconditioned classified sample of the crystal population of the crystallizer. A data analyzer then converts the signals from the particle analyzer into control signals to manipulate various process control variables such as fines removal rate, feed rate, pH adjustment, mixing rate and/or seed addition.

Japanese Patent publication no. 150127 describes a method for making large crystals of ammonium sulfate from a DTB crystallizer. This document teaches monitoring of slurry density, stirrer motor current, the height of the crystal bed under the baffle in the elutriation chamber and the crystal size distribution. Withdrawal of slurry from the crystallizer is alternately increased and decreased to keep the particle size distribution between an upper limit (onset of the crest in the cycle) and a lower limit (the onset of a fines shower). Effectively, this method does not eliminate cycling; but reacts to it to increase total production of large crystals. Data in the publication show that although the production of crystals above screen size 12 (1.4 mm) is reasonably stabilized; the more desirable crystals above size 9 (2.00 mm) still varies from about 35 to about 90%. The publication also teaches wet screening of the slurry withdrawn, and return of fine crystals with mother liquor to the crystallizer. Since the withdrawal rate varies, it is inferred that the addition rate of these fine crystals is not constant.

Japanese Patent publication no. 51970 teaches addition of 1-20% fine crystals (based on clear saturated feed solution) of ammonium sulfate of a desired shape to a cooling crystallizer to produce an increase of large crystals of the desired shape. The fine crystals are defined as those below 20 mesh (0.85 mm). It is preferred to keep the amount of seed below 20% or the crystal size will be too small. The publication is somewhat confusing since the example shows that addition of 1% feed produces no increase in crystals above 12 mesh (1.4 mm), and only addition of 10% seed crystals increases the 12 mesh from 39 to 44%. The publication also teaches that if the seed exceeds 20 mesh (0.6 mm), the crystals will be too large. This is difficult to understand because even if all of the ammonium sulfate formed by cooling the clear solution precipitated on the seed, the size should only grow to about that of a 16 mesh crystals (1.0 mm).

In a continuous crystallization process employing an evaporative draft tube baffle (DTB) crystallizer apparatus to produce crystal product selected from the group consisting of ammonium sulphate, potassium chloride, potassium sulphate and sodium chloride, said process comprising
(a) introducing a clear feed solution containing dissolved solute to a body of slurry which comprises crystal particles in a solution in a vessel of the DTB crystallizer apparatus;
(b) maintaining conditions in said vessel for establishing super saturation in said slurry body to induce crystallization therein;
(c) circulating said body of slurry in a predetermined flow path in said vessel at a flow rate sufficient to maintain said crystal particles in suspension;
(d) segregating a portion of said slurry body in a plurality of elutriation chambers;
(e) withdrawing a stream of crystal particles below a predetermined size and slurry liquid from each of said elutriation chambers through an outlet adjacent an upper end thereof, removing the crystal particles in the stream by dissolution and thereafter returning the stream to the body of slurry in the vessel; and
(f) continuously removing product crystals from the DTB crystallizer apparatus;
   the improvement comprising
(g) feeding at constant rate to the body of slurry a suspension of crystals in a solution at a temperature no greater than the operating temperature of the DTB crystallizer vessel, said suspension of crystals comprising solution and 6 to 24% by volume, based on total volume of the suspension, of crystals with at least 35% of the crystals larger than 14 mesh (1.2 mm) in size, in an amount whereby the weight of crystals is 4 to 25 percent of the weight of the product withdrawn in step (f); whereby cycling in the particle size distribution of the product withdrawn is reduced and rate of production of granular size crystals is increased.

Fig. 1 represents a schematic diagram of apparatus for employing the process of the invention.

Fig. 2 represents cyclic behavior without addition of the suspension for successive shifts of production.

Fig. 3 represents the stable behavior obtained by the process of this invention with the addition of the suspension for successive shifts of production.

The crystallization apparatus utilized in this invention is similar to that in both design and operation as that described in the Bennett Patent US-A-3,873,275. This apparatus has become known in the crystallization industry as a draft tube baffle crystallizer (DTB). A description of a typical apparatus and its normal operation are given below. The description and examples are written for crystallization of ammonium sulfate; but the same type of apparatus may be used for crystallization of potassium chloride, potassium sulfate, sodium chloride and other crystalline materials.

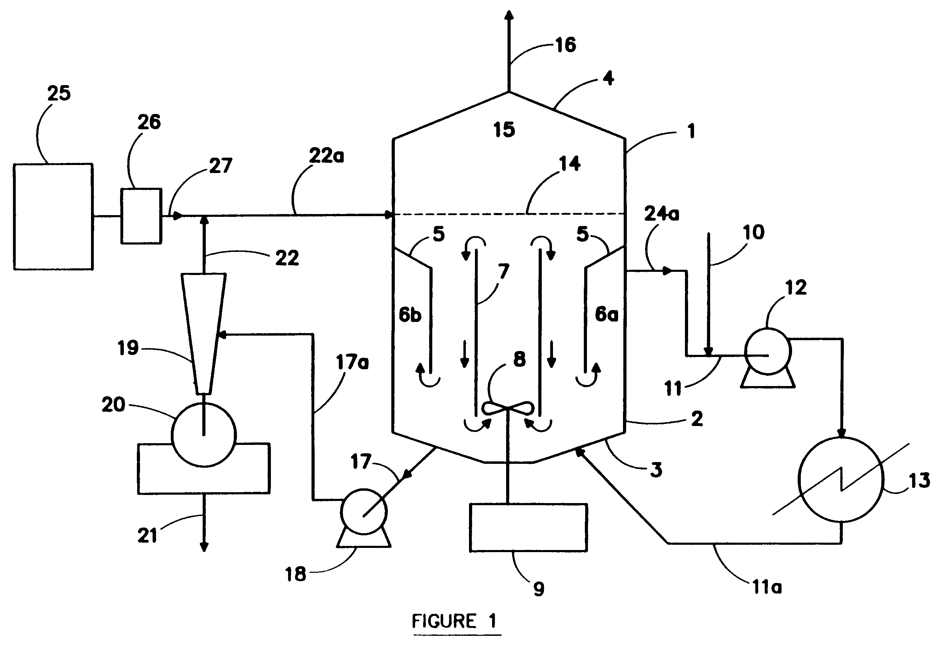

A simplified diagram of apparatus is shown in Figure 1.

The crystallization vessel generally designated by the numeral 1 consists of a cylindrical section 2 to which is attached a tapered bottom section 3 and a domed top section 4. A funnel-shaped baffle 5 defines two elutriation chambers 6a and 6b via vertical supports which are not shown. The number 7 designates a draft tube. Circulation of crystal slurry is provided by a propeller 8 mounted to a shaft and drive 9. Flow is up the draft tube and down along its exterior; and is of sufficient velocity to suspend the crystals in the vessel.

Concentrated ammonium sulfate feed solution from line 10 which is drawn into line 11 via the pump 12 is heated in heat exchanger 13 and enters the vessel via line 11a. It is mixed with circulating slurry within the vessel and propelled upward through the draft tube 7 via the movement of propeller 8. Evaporation of solvent water takes place close to the liquid level 14 induced by a vacuum created in the vapor space 15. Water vapor is removed via line 16. Evaporation of sufficient water causes the saturation limit of ammonium sulfate to be exceeded. This supersaturation is relieved either by deposition of newly-formed ammonium sulfate on existing crystals which is desirable or by formation of new fine ammonium sulfate crystals often referred to as nuclei, which is undesirable because it leads to smaller-sized crystals.

Crystal slurry is removed via line 17 by the suction of pump 18 and discharged to a thickener 19 by line 17a. The thickener is normally a cyclonic separator. The thickened crystal slurry is discharged to a centrifuge 20 where crystals are separated from mother liquor. The wet crystals are discharged via line 21 to a dryer (not shown), then screened to the appropriate product size.

The overflow of thickener 19 which consists of crystals and saturated solution is returned to the crystallizer close to the liquid level 14 by lines 22 and 22a.

Nuclei and small crystals with mother liquor are removed from the crystallizer via the elutriation chambers 6a and 6b formed by the baffle 5, and are conveyed to line 11 by lines 24a and 24b (not shown for simplicity) where this fines slurry mixes with fresh feed from line 10 and the crystals subsequently are dissolved by heat supplied by heat exchanger 13.

A typical large DTB crystallizer useful for this invention is about 15 m. (50 ft.) tall and 7.2 m. (24 ft.) in diameter and has volume of about 378.6 m³ (100,000 gallons). Circulation up the draft tube is about 378.6 m³ (100,000 gallons) per minute. The circulation through the external fines dissolving circuit provided by pump 12 is about 37.9 m³ (10,000 gallons) per minute.

The present invention provides an improved crystallization process in which cycling in the size distribution of product crystals is reduced and the production of crystals larger than size 10 Tyler mesh (1.70 mm) is improved. This method consists of adding at constant rate to the crystallizer vessel a suspension of crystals in essentially saturated solution from some external source designated 25 on Figure 1. Flow is controlled by the flowmeter 26. The drawing shows the suspension enters the crystallization apparatus via line 27 to line 22A, the thickener overflow line, which enters the crystallization vessel 1 close to the liquid level 14. This has been done for simplification. It should be understood that the suspension could enter the vessel directly at some other point close to the liquid level 14 or close to the bottom inlet to the draft tube 7 via appropriate piping.

We have found that both the size and quantity of the crystals are important. It was found that the crystals in the suspension must be a mixture of medium sized crystals 1.2 - 1.7 mm. (14 to 10 mesh) and smaller sized (below 14 Tyler mesh (1.2 mm)). For effective operation, the suspension of crystals should contain 6-24% by volume, preferably 12-24%, of crystals with at least 35%, preferably 35-85%, of the crystals larger than 14 mesh (1.2 mm) in size. Additionally, it is preferred that no greater than 15% of the crystals are larger than 10 mesh (1.7mm). The suspension of crystals in a solution is added in an amount whereby the weight of crystals is 4 to 25%, preferably 8 to 20%, of the weight of the product which is withdrawn from the DTB crystallization apparatus via line 21. The temperature of the feed suspension should be no greater than, preferably at least 10°C lower than, the operating temperature of the DTB crystallizer vessel.

### Example 1

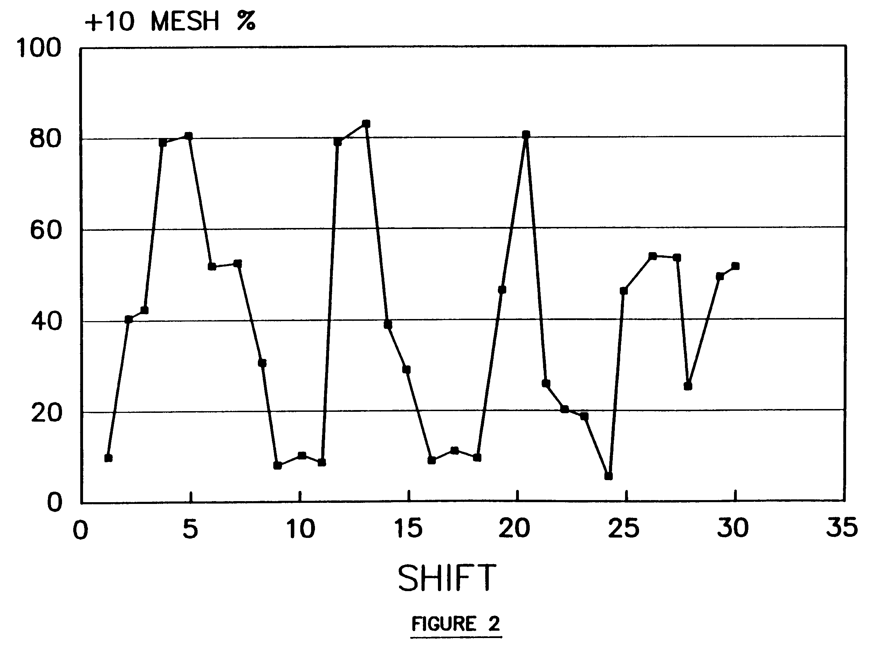

In the typical operation of the evaporative DTB crystallizer, the vessel is about 7.2 m. (24 feet) in diameter and is about 15 m. (50 feet) tall. The capacity is about 378.6 m³ (100,000 gallons). Clear ammonium sulfate solution (43% solution) is fed to the crystallizer operating at 80°C. Water is removed such that the production rate of crystals is 595 kg/min (1310 lbs/min). The percent crystals in the slurry circulating in the vessel is 30% settled volume (about 17% crystals by volume). The percent of crystals of size greater than 1.7 mm. (Tyler 10 mesh) are given in Figure 2 for several successive shifts of production. The cyclic behavior is illustrated in Figure 2.

### Example 2

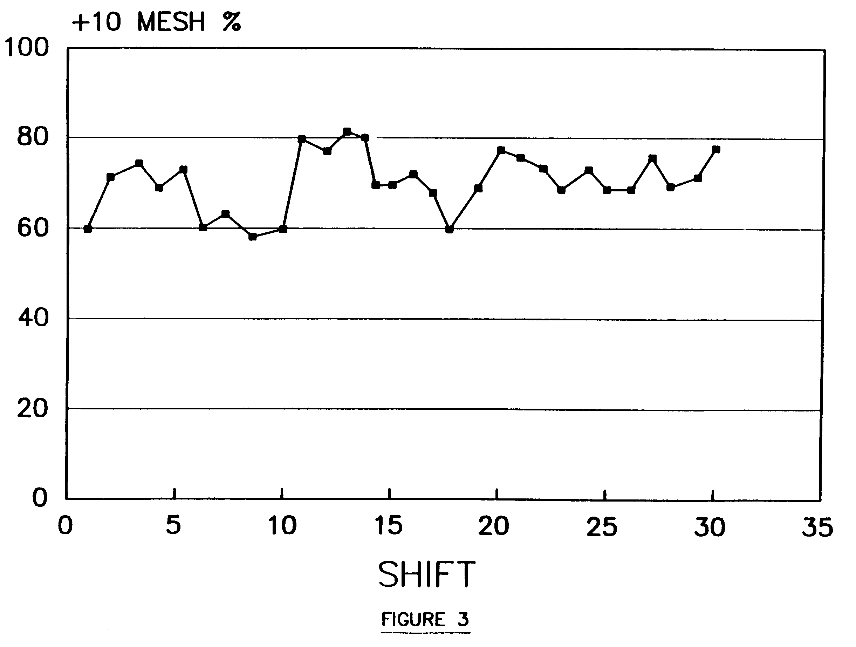

The equipment of Example 1 is utilized except that 267 kg/min (588 lbs/min) of a suspension of 22.2 parts ammonium sulfate crystals in 77.8 parts of 46.6% ammonium sulfate solution is fed continuously at 60°C to the liquid level of the DTB crystallizer which operates at 80°C. The size distribution of crystals in the suspension is 1% 8 x 10 Tyler mesh (2.36 x 1.70 mm), 35% 10 x 14 Tyler mesh (1.70 x 1.40 mm); and 64% below 16 mesh (1.40 mm). The flow of clear 43% solution is reduced such that 627 kg/min (1380 lb/min). of ammonium sulfate are withdrawn from the crystallizer. The percent of crystals greater than 1.7 mm. (Tyler 10 mesh) are shown in Figure 3 for several successive shifts. Comparison of Figure 3 with Figure 2 demonstrates the remarkable reduction in cycling of the particle size distribution of the product withdrawn from the process of the invention.

## Claims

1. A continuous crystallization process employing an evaporative draft tube baffle (DTB) crystallizer apparatus to produce crystal product selected from the group consisting of ammonium sulfate, potassium chloride, potassium sulfate, and sodium chloride, said process comprising
(a) introducing a clear feed solution containing dissolved solute to a body of slurry which comprises crystal particles in a solution in a vessel of the DTB crystallizer apparatus;
(b) maintaining conditions in said vessel for establishing super saturation in said slurry body to induce crystallization therein;
(c) circulating said body of slurry in a predetermined flow path in said vessel at a flow rate sufficient to maintain said crystal particles in suspension;
(d) segregating a portion of said slurry body in a plurality of elutriation chambers;
(e) withdrawing a stream of crystal particles below a predetermined size and slurry liquid from each of said elutriation chambers through an outlet adjacent an upper end thereof, removing the crystal particles in the stream by dissolution and thereafter returning the stream to the body of slurry in the vessel; and
(f) continuously removing product crystals from the DTB crystallizer apparatus;
comprising of
(g) feeding at constant rate to the body of slurry a suspension of crystals in a solution at a temperature no greater than the operating temperature of the DTB crystallizer vessel, said suspension of crystals comprising solution and 6 to 24% by volume, based on total volume of the suspension, of crystals with at least 35% of the crystals larger than 14 mesh (1.2 mm) in size, in an amount whereby the weight of crystals is 4 to 25 percent of the weight of the product withdrawn in step (f); whereby cycling in the particle size distribution of the product withdrawn is reduced and rate of production of granular size crystals is increased.

2. The process of claim 1 wherein said suspension of crystals comprises 12 to 24% by volume of crystals.

3. The process of claim 1 wherein said suspension comprises crystals with 35 to 85% of the crystals larger than 14 mesh (1.2 mm) in size and no greater than 15% of the crystals larger than 10 mesh (1.7 mm).

4. The process of claim 3 wherein said suspension of crystals comprises 12 to 24% by volume of crystals.

5. The process of any of claims 1, 2 or 3 wherein said suspension of crystals in a solution is fed in an amount whereby the weight of crystals is 8 to 20 percent of the weight of the product withdrawn in step (f).

6. The process of claim 4 wherein said suspension of crystals in a solution is fed in an amount whereby the weight of crystals is 8 to 20 percent of the weight of the product withdrawn in step (f).

7. The process of claim 6 wherein the suspension of crystals is fed in step (g) to the body of slurry at a point at or adjacent to the liquid level in the DTB crystallizer vessel.

8. The process of any of preceding claims 1-7 comprising the continuous crystallization of ammonium sulfate.

9. The process of any of preceding claims 1-8 wherein the suspension of crystals in step (g) is at a temperature at least 10°C lower than the operating temperature of the vessel.

## Patentansprüche

1. Kontinuierliches Kristallisationsverfahren unter Anwendung einer verdampfenden Umlenkkristallisatorvorrichtung mit Ablenkwandungen (DTB) zum Herstellen eines Kristallproduktes, welches aus der aus Ammoniumsulfat, Kaliumchlorid, Kaliumsulfat und Natriumchlorid bestehenden Gruppe ausgewählt ist, wobei das Verfahren folgendes umfaßt:
(a) das Einführen einer klaren Zufuhrlösung, welche den aufgelösten Stoff enthält, in den Körper einer Aufschlämmung, die Kristallpartikel in einer Lösung in einem Gefäß der DTB-Kristallisatorvorrichtung aufweist;
(b) das Halten von Bedingungen in dem Gefäß zur Bildung einer Übersättigung in dem Aufschlämmungskörper, um eine Kristallisation darin zu induzieren;
(c) das Zirkulieren des Aufschlämmungskörpers in einem vorbestimmten Strömungsweg in dem Gefäß, bei einer ausreichenden Strömungsgeschwindigkeit, um die Kristallpartikel in Suspension zu halten;
(d) das Absondern eines Teiles des Aufschlämmungskörpers in eine Mehrzahl von Schlammkammern;
(e) das Abziehen eines Stromes von Kristallpartikeln unterhalb einer vorbestimmten Größe sowie von Aufschlämmungsflüssigkeit von jeder der Schlammkammern durch einen dem oberen Ende derselben benachbarten Auslaß, das Entfernen der Kristallpartikel in dem Strom durch Auflösung und anschließendes Rückführen des Stromes zum Aufschlämmungskörper in dem Gefäß; und
(f) kontinuierliches Entfernen von Produktkristallen aus der DTB-Kristallisatorvorrichtung;
welches ferner folgendes aufweist:
(g) das Zuführen einer Suspension von Kristallen in einer Lösung mit konstanter Geschwindigkeit zum Aufschlämmungskörper bei nicht höherer Temperatur als der Betriebstemperatur des DTB-Kristallisatorgefäßes, wobei die Suspension der Kristalle eine Lösung und 6 bis 24 Volumen-%, auf Basis des Gesamtvolumens der Suspension, an Kristallen aufweist, von welchen Kristallen mindestens 35% eine höhere Größe als 14 mesh (1,2 mm) besitzen und in einem Anteil vorliegen, wodurch das Gewicht der Kristalle 4 bis 25 Prozent des Gewichtes des im Schritte (f) abgezogenen Produktes beträgt; wodurch die Zyklusbildung in der Partikelgrößenverteilung des abgezogenen Produktes verringert und die Produktionsrate an Kristallen in Granulatgröße erhöht wird.

2. Verfahren nach Anspruch 1, bei dem die Suspension der Kristalle 12 bis 24 Volumen-% an Kristallen aufweist.

3. Verfahren nach Anspruch 1, bei dem die Suspension Kristalle aufweist, von denen 35 bis 85 % der Kristalle eine bedeutendere Größe als 14 mesh (1,2 mm) haben und nicht mehr als 15% der Kristalle größer als 10 mesh (1,7 mm) sind.

4. Verfahren nach Anspruch 3, bei dem die Suspension der Kristalle 12 bis 24 Volumen-% an Kristallen aufweist.

5. Verfahren nach einem der Ansprüche 1, 2 oder 3, bei dem die Suspension der Kristalle in einer Lösung in einer Menge zugeführt wird, durch die das Gewicht an Kristallen 8 bis 20 Prozent des Gewichtes des im Schritt (f) abgezogenen Produktes ausmacht.

6. Verfahren nach Anspruch 4, bei dem die Suspension der Kristalle in einer Lösung in einer Menge zugeführt wird, durch die das Gewicht an Kristallen 8 bis 20 Prozent des Gewichtes des im Schritt (f) abgezogenen Produktes ausmacht.

7. Verfahren nach Anspruch 6, bei dem die Suspension der Kristalle im Schritt (g) dem Aufschlämmungskörper an einem Punkte am oder benachbart dem Flüssigkeitsspiegel im DTB-Kristallisationsgefäß zugeführt wird.

8. Verfahren nach einem der vorhergehenden Ansprüche 1-7, welches die kontinuierliche Kristallisation von Ammoniumsulfat umfaßt.

9. Verfahren nach einem der vorhergehenden Ansprüche 1-8, bei dem die Suspension der Kristalle im Schritt (g) auf einer Temperatur liegt, die mindestens 10°C tiefer ist als die Betriebstemperatur des Gefäßes.

## Revendications

1. Procédé de cristallisation en continu utilisant un appareil de cristallisation ou cristalliseur à chicane à tube aspirateur (CTA) à évaporation pour engendrer un produit cristallin choisi dans le groupe constitué du sulfate d'ammonium, du chlorure de potassium, du sulfate de potassium et du chlorure de sodium, conformément auquel
(a) on introduit une solution d'alimentation limpide ou claire contenant un soluté dissous dans une masse de suspension qui comprend des particules de cristaux dans une solution dans un appareil de cristallisation ou cristalliseur à CTA;
(b) on maintient des conditions dans le récipient précité qui permettent d'établir une sursaturation dans ladite masse de suspension pour y induire la cristallisation;
(c) on fait circuler ladite masse de suspension selon un trajet d'écoulement prédéterminé dans le récipient précité à un débit suffisant à maintenir lesdites particules de cristaux en suspension;
(d) on soumet à ségrégation une partie de ladite masse de suspension dans une multiplicité de chambres d'élutriation;
(e) on prélève ou soutire un courant de particules de cristaux en dessous d'un calibre prédéterminé et du liquide de suspension de chacune des chambres d'élutriation précitées à travers une sortie voisine de leur extrémité supérieure individuelle, on élimine les particules de cristaux dans le courant par dissolution et on renvoie ensuite le courant à la masse de suspension dans le récipient, et
(f) on enlève en continu les cristaux produits de l'appareil de cristallisation ou cristalliseur à CTA;
caractérisé en ce que
(g) on amène à vitesse constante à la masse de suspension, une suspension de cristaux dans une solution et à une température non supérieure à la température de fonctionnement du récipient de cristallisation à CTA, ladite suspension de cristaux comprenant une solution et 6 à 24% en volume, sur base du volume total de la suspension, de cristaux, où au moins 35% des cristaux ont un calibre plus important que 14 mesh (1,2 mm), en une proportion telle que le poids des cristaux représente de 4 à 25% du poids du produit prélevé ou soutiré dans l'étape (f), si bien qu'un retour cyclique de la granularité des particules du produit prélevé ou soutiré est réduit et que la vitesse de production de cristaux de calibre granulaire soit augmentée.

2. Procédé suivant la revendication 1, caractérisé en ce que la suspension de cristaux comprend de 12 à 24% en volume de cristaux.

3. Procédé suivant la revendication 1, caractérisé en ce que la suspension comprend des cristaux dont 35 à 85% ont un calibre supérieur à 14 mesh (1,2 mm) et pas plus de 15% des cristaux ont un calibre supérieur à 10 mesh (1,7 mm).

4. Procédé suivant la revendication 3, caractérisé en ce que la suspension de cristaux comprend 12 à 24% en volume de cristaux.

5. Procédé suivant l'une quelconque des revendications 1, 2 ou 3, caractérisé en ce que ladite suspension de cristaux dans une solution est débitée entre une proportion telle que le poids des cristaux représente de 8 à 20% du poids du produit prélevé ou soutiré dans l'étape (f).

6. Procédé suivant la revendication 4, caractérisé en ce que ladite suspension de cristaux dans une solution est débitée en une quantité telle que le poids des cristaux varie de 8 à 20% du poids du produit soutiré ou prélevé dans l'étape (f).

7. Procédé suivant la revendication 6, caractérisé en ce que la suspension de cristaux est introduite, au cours de l'étape (g), dans la masse de suspension en un point à hauteur ou voisin du niveau du liquide dans le récipient du cristalliseur à CTA.

8. Procédé suivant l'une quelconque des revendications 1 à 7, caractérisé en ce qu'il comprend la cristallisation continue de sulfate d'ammonium.

9. Procédé suivant l'une quelconque des revendications 1 à 8, caractérisé en ce que la suspension de cristaux dans l'étape (g) se trouve à une température d'au moins 10°C inférieure à la température opératoire ou de fonctionnement du récipient.
